# EUROPEAN PATENT APPLICATION

(11) **EP 0 676 612 A1**
(43) Date of publication of application: **11.10.1995**
(21) Application number: 95105137.4
(22) Date of filing: 05.04.1995
(51) Int. Cl.: F41J 7/06, A63F 9/02

(54) **Intelligent target for shooting game**

(30) Priority: 06.04.1994 JP 90763/94; 06.04.1994 JP 90765/94; 15.07.1994 JP 185203/94
(71) Applicant: SEGA ENTERPRISES, LTD., Tokyo 144 (JP)
(72) Inventor: Ikematsu, Shinichi, Ohta-Ku, Tokyo (JP); Kawakami, Hiroshi, Ohta-Ku, Tokyo (JP); Nakano, Satoshi, Ohta-Ku, Tokyo (JP); Kouno, Tatsuya, Ohta-Ku, Tokyo (JP); Hiromi, Keisuke, Ohta-Ku, Tokyo (JP); Yoshimoto, Masakazu, Ohta-Ku, Tokyo (JP); Tamura, Kazuo, Ohta-Ku, Tokyo (JP)
(74) Representative: Klunker . Schmitt-Nilson . Hirsch

(57) **Abstract**

In a shooting game in an amusement facility in which robot-type targets (300) are installed, it is intended to provide the targets (300) with intelligent motion functions so that the player can experience a realistic shooting battle.

In an intelligent target for shooting game used for a shooting game which is installed in an amusement facility, and in which a player plays a shooting battle with a robot-type target (300), the target (300) comprises an operating mechanism, wherein the operating mechanism comprises a combination of one or more basic units (330A-G), the basic unit (330A-G) consisting of a drive mechanism such as a pneumatic or hydraulic cylinder (331) driven under drive control of a control system (100,200), and a link (332), the basic unit (330A-G) causing a part or all of molding of the target (300) to take predetermined unit motions.

## Description

### BACKGROUND OF THE INVENTION

### 1. Field of the Invention

The present invention relates to a target used for a shooting game which is installed in an amusement facility, and in which a player plays a shooting battle with a robot-type target, and, more particularly, to an intelligent target for a shooting game which can be controlled by a control system for various actions.

### 2. Description of the Related Art

Games in which a player plays shooting of a target installed in an amusement facility or the like with a model gun such as a rifle include a so-called battle-type shooting game in which the player plays shooting with a robot-type target. In such battle-type shooting game, infrared ray, for example, is used in place of live ammunition. That is, light projectors and photodetectors are mounted on the gun of the player, and on the target. In the shooting, infrared ray is projected from the light projector when the gun is fired. When the infrared ray is detected by the photodetector, it means that the receiver is shot, and an indication of shot (sound or the like) is generated. Although the target used for such battle-type shooting is a robot-type, it takes very simple action and shoots from a fixed location. When it is shot, it makes such simple action as going down or falling backward.

Games using such robot-type target for causing the player to experience a shooting battle have been implemented. The conventional targets have not been satisfactory in the following points. First, the conventional targets for shooting games have been always exposed in the amusement facility so that the player may predict to some extent from where the targets shoot. Second, because the targets are exposed, some rules (for example, when a part of the target becomes red, it means that the target is in attack, while, when it becomes blue, the player can make attack) should be predetermined for the play of shooting game to avoid a situation where attack becomes simple. This significantly reduces the fun to play. Third, even if a bullet of the player hits the target, the action of the target is not satisfactory because it only goes down or falls backward as described.

### SUMMARY OF THE INVENTION

The intelligent target for shooting game according to the present invention is invented in view of the above-mentioned circumstances.

A first embodiment of the intelligent target for shooting game according to the present invention comprises an operating mechanism, wherein said operating mechanism comprises a combination of one or more basic units, the basic unit consisting of a drive mechanism driven under drive control of a control system, and a link, the basic unit causing a part or all of molding of the target to take predetermined unit motions.

For the intelligent target comprising the operating mechanism constructed as above, it becomes possible to have the target take intelligent actions under the control of the control system. In addition, targets with various actions modes can be easily provided by selectively combining the basic units of respective operating types. Because various actions can be provided for the targets, the attacks may not be simple ones so that there is no need to provide rules for limiting the action in attack as in the prior art.

Furthermore, a second embodiment of the intelligent target according to the present invention comprises an operating mechanism which can provide complicated actions as, for example, defined by the following (1), and the operation of which is controlled under the drive control of the control system.
(1) An operating mechanism comprising a target body mounting member having a hole with a spiral groove, a target body having a caster engaging said groove positioned on its peripheral wall, and provided at its lower section with a cylindrical fitting section fitting in said hole through said caster, and a cylinder fixed on the bottom of said hole and having a piston rod fixed to the lower end of the fitting section of the target body, a molding of said target mounted on the upper section of said target body being vertically movable while rotating under the drive control of a control system.

For the intelligent target comprising the operating mechanism constructed as (1), the operating mechanism is constructed to take complicated movement by reducing the number of cylinders as possible and extensively utilizing linkage so that it is possible to provide an intelligent target which can make complicated actions under easy control, and has an inexpensive operating mechanism with small size and light weight.

In addition, the intelligent target for shooting game according to the present invention uses pneumatic cylinders which are driven at a speed selected by the drive control of the control system as the drive source for the operating mechanism so that parts or all of the target can make actions at different speed.

For the intelligent target for shooting game comprising the operating mechanism which uses the above-described pneumatic cylinders as the drive source, it is possible to have the target take various actions including slow and fast unit motions. That is, when one action is represented by combinations of one or more unit motions, the action may not be fully reproduced by merely taking into account geometric displacement for such unit motions. For example, an action in which a target sneaks out from a place and quietly aims with a gun cannot be distinguished from an action in which a target suddenly jumps out from a place and makes a containment attack with a gun. Such difference of actions can be attained by controlling the speed of pneumatic cylinders under the drive control of the control system to provide slow and fast motions.

### BRIEF DESCRIPTION OF THE DRAWINGS

FIG. 1 is a block diagram showing an example of overall configuration of a shooting game to which an intelligent target for shooting game according to the present invention applies;
FIG. 2 is an example of configuration for the intelligent target for shooting game according to the present invention;
FIG. 3 is the configuration showing a first example of basic unit constituting a first implementation of operating mechanism;
FIG. 4 is the configuration showing a second example of basic unit constituting the first implementation of operating mechanism;
FIG. 5 is the configuration showing a third example of basic unit constituting the first implementation of operating mechanism;
FIG. 6 is the configuration showing a fourth example of basic unit constituting the first implementation of operating mechanism;
FIG. 7 is the configuration showing a fifth example of basic unit constituting the first implementation of operating mechanism;
FIG. 8 is the configuration showing a sixth example of basic unit constituting the first implementation of operating mechanism;
FIG. 9 is the configuration showing a seventh example of basic unit constituting the first implementation of operating mechanism;
FIG. 10 is the configuration showing a first example of combination of basic units constituting the first implementation of operating mechanism;
FIG. 11 is the configuration showing a second example of combination of basic units constituting the first implementation of operating mechanism;
FIG. 12 is the configuration showing a third example of combination of basic units constituting the first implementation of operating mechanism;
FIG. 13 is the configuration showing a first example of a second implementation of operating mechanism;
FIG. 14 is the configuration showing a second example of the second implementation of operating mechanism;
FIG. 15 is the configuration showing a third example of the second implementation of operating mechanism;
FIG. 16 is the configuration showing a fourth example of the second implementation of operating mechanism;
FIG. 17 is the configuration showing a fifth example of the second implementation of operating mechanism;
FIG. 18 is the configuration showing a sixth example of the second implementation of operating mechanism;
FIG. 19 is the configuration showing a seventh example of the second implementation of operating mechanism;
FIG. 20 is the configuration showing a eighth example of the second implementation of operating mechanism;
FIG. 21 is the configuration showing a ninth example of the second implementation of operating mechanism;
FIG. 22 is a pneumatic circuit for driving a cylinder used in the present invention; and
FIG. 23 is a diagram illustrating the functions of a three-position valve in the cylinder driving pneumatic circuit of FIG. 22.

### DESCRIPTION OF THE PREFERRED EMBODIMENTS

The object of the present invention is to provide an intelligent target for shooting game which has robot-type targets and is installed in an amusement facility, wherein the targets are provided with intelligent motion functions so that the player can experience a realistic gun-shooting. It is intended to provide an action mechanism for the intelligent target for shooting game with the intelligent motion functions including fast and slow movements such that the target hidden in the amusement facility sneaks or jumps out behind a pillar, aims with a gun, shoots the player, is coming out but quickly retracts, or runs away while shooting, or its head is blown off when it is shot.

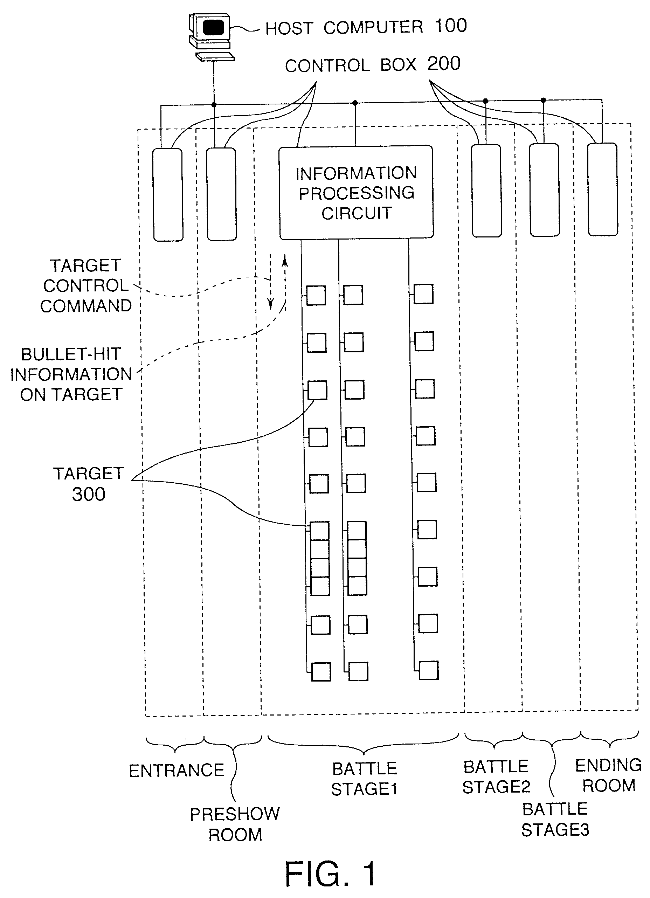

FIG. 1 is a block diagram showing an example of overall configuration of a shooting game to which an intelligent target for shooting game according to the present invention applies. First, the outline of the entire system will be described with reference to the figure. A shooting game room installed in an amusement facility is divided into an entrance for performing reception tor the game, guidance of the game with a large monitor, and delivery and receipt of a gun, a pre-show room for preparing tor the game, battle stages 1 - 3 where the gun-shooting with the targets are conducted, and an ending game where the player receives his or her performance or his or her team performance. A player or a team consisting of multiple players plays the game through these compartments. The entire system is controlled by a host computer 100, while each compartment is controlled by a control box 200. The host computer 100 is coupled to the control box 200 for each compartment through optical communication cables, and performs concentrated management of the entire system such as flow of the players, start/end of the game, collection of data, totalization, and reporting.

The control box 200 is single hardware, commonly used for every compartments, and controls the system for each compartment under the commands from the host computer 100. For example, in the pre-show room, it controls guidance to each player, and display of the status in test firing on a monitor for each player. In the battle stages 1 - 3, it controls the motion of target 300. In the ending room, it controls printing of the performance of each player. In addition, it controls lighting for each compartment and opening/closing of doors through controllers such as those for lighting facilities (not shown).

Targets 300 installed in each compartment are connected to the control box 200 through optical communication cables to aim the player with a gun or to make an attack against the player after appearing from behind a pillar under commands from the control box 200. The target 300 is provided with shot sensor means and means for detecting the position of a player, and transmits sensed shot target information and player positions information to the control box 200 through optical communication. The control box 200 controls various actions of each target 300 based on preset information, information on commands from the host computer 100, and dynamic information being sent from each target 300.

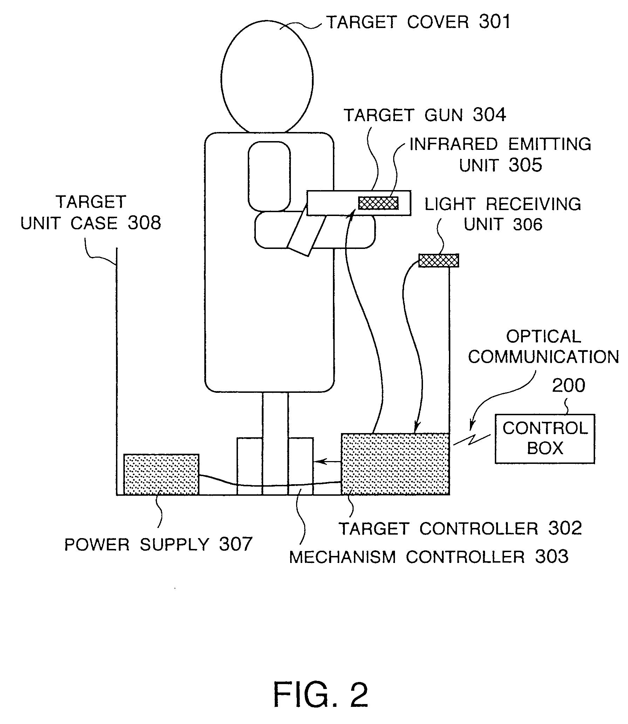

FIG. 2 illustrates the basic configuration of the intelligent target according to the present invention. The target 300 comprises a molding of the target (hereinafter called the "target molding") 301, a target controller 302 for controlling the action of target or output of sound effect, a mechanical controller 303 for drive controlling an operating mechanism of the target under commands from the target controller 302, a target gun 304 which is a gun unit of the target, a light emitting unit 305 for emitting infrared ray corresponding to a bullet, a light receiving unit 306 for sensing infrared ray shot (radiated) from the player, a power supply 307, and a target unit casing 308 for housing these components. Shot is sensed by the light receiving unit 306, and the shot information is transmitted to the control box 200. The means for detecting the position of the player is provided, as required, and is arranged to be able to recognize existence of the player and the direction to the place where the player exists.

With such construction, the control for the action of the target 300 is briefly described with reference to FIG. 2. The target controller 302 receives target control commands from the control box 200, controls the motion of the target or reaction when it is shot through the mechanical controller 303, and performs control for sensing of shot with the light receiving unit 306 and for shooting on the gun with the light emitting unit 305. The operating mechanism of the target is controlled by controlling pneumatic valves The target 300 is arranged to emit light and to sound the sound of gunfire when it attacks, as well as to take such reaction that, when it is shot, it emits flash and cries, and blows its head off.

The exemplary configuration of the operating mechanism according to a first implementation of the intelligent target of the present invention will be described in detail. The operating mechanism of the target 300 is constructed by combining one or more basic units each of which has a part or all of the target molding 301 of the target 300 take a predetermined unit motion. The basic unit for unit motion consists of a drive source and a link. A basic unit can be combined in every possible manners with other basic units because the joint is common to all basic units.
Configurations of the basic unit for unit motion will be described in detail in the following.

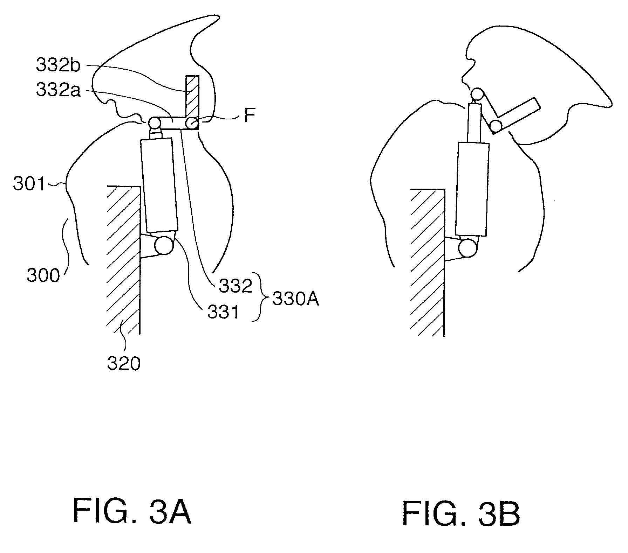

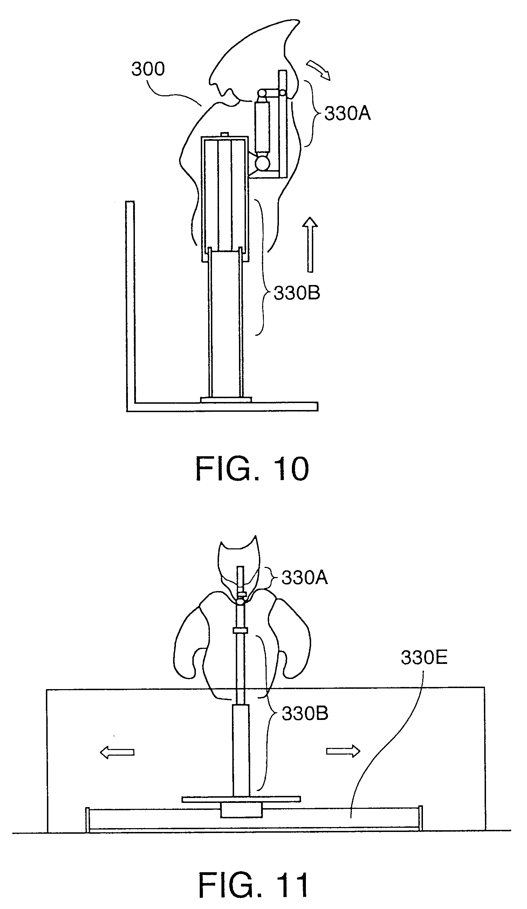

FIGS. 3 - 9 are the configurations showing examples of the basic unit, while FIG. 10 - 12 are the configurations showing their combinations. By referring to these figures, embodiments of the intelligent target for shooting game according to the present invention will be described. Although any type of drive source such as pneumatic, hydraulic or electrical type may be used as the drive source, the embodiment is described for an example employing a pneumatic drive source which is cost effective and is excellent in quick responsiveness and safety, and a pneumatic cylinder as the actuator.

FIG. 3 is the configuration showing a first example of basic unit which is a unit for causing a motion when the target 300 is shot (hereinafter called the "A-type unit"). The A-type unit 330A consists of, as shown in FIG. 3 (A), a trunnion mounting cylinder 331 pivoted on the body 320 of the target 300, and a link 332 having the first and second arms 332a and 332b with a predetermined angle the joint F of which is pivoted to the target body 320, the first arm 332a being pivoted on the piston rod of the trunnion mounting cylinder 331; the target molding 301 mounted on the second arm 332b of the link 332 being inclined around the joint F as a support point. When this basic unit 330A is used, for example, for inclining the head, it is possible to instantaneously incline backward the head of the target molding 301 as shown in FIG. 3 (B).

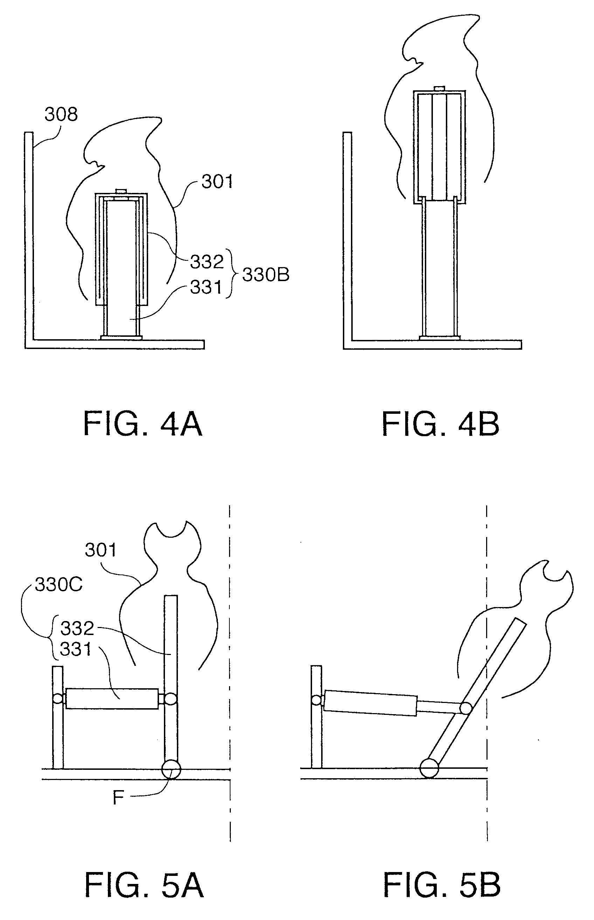

FIG. 4 is the configuration showing a second example of basic unit which is a unit for vertically moving the target molding 301 (hereinafter called the "B-type unit"). The B-type unit 330B consist of, as shown in FIG. 4 (A), a cylinder 331 fixed on the base of the target unit casing 308, and a cylindrical link 332 fixed on the piston rod of the cylinder 331 and surrounding the cylinder 331 for guiding the vertical movement of the cylinder 331 so as to vertically move the target molding 301 mounted on the link 332. When this unit is used, for example, for expanding and contracting the legs, and the target 300 is placed behind cover, it is possible to have the target suddenly appear from behind the cover as shown in FIG 4 (B).

FIG. 5 is the configuration showing a third example of basic unit which is a unit for inclining the target molding 301 (hereinafter called the "C-type unit"). The C-type unit 330C consists of, as shown in FIG. 5 (A), a trunnion mounting cylinder 331 pivoted on the side wall of a cylinder mounting member mounted upright on the base, and a rod link 332 a predetermined section of the arm of which is pivoted on the piston rod of the trunnion mounting cylinder 331 and an end of the arm of which is pivoted on the base so as to incline the target molding 301 mounted on the other end of the arm around one end F of the arm as a support point. When this unit is used, for example, for inclining the entire body, and the target 300 is paced behind cover, it is possible to have a part of the face or body of the target molding 301 peep through the cover as shown in FIG. 5 (B).

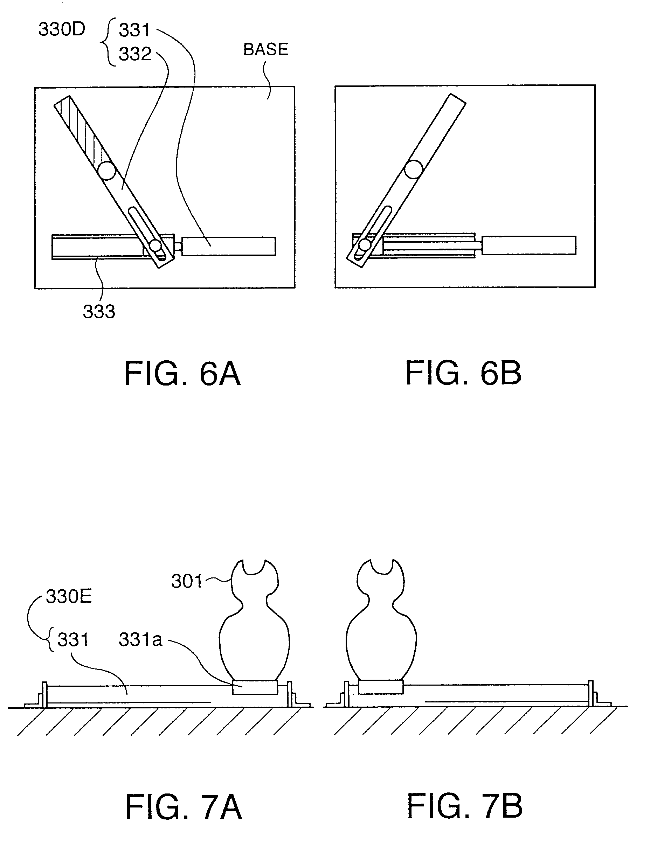

FIG. 6 is the configuration showing a fourth example of basic unit which is a unit for repeatedly rocking the target molding 301 (hereinafter called the "D-type unit"). The D-type unit 330D consists of, as Shown in FIG. 6 (A), a cylinder 331 fixed on the base so that its piston rod is guided by a slide rail 333 provided on the base, and a link 332 to which a connecting rod of the piston head is connected through a slide hole provided near one end of the arm, and a predetermined section of the arm of which is pivoted on the base so as to rock the target molding mounted on the other end of the arm of the link 332 (shaded area in the figure). In the example of mechanism shown in FIG. 6, it is possible to rock the target through a range of about 60 to 70 degrees as shown in (A) and (B) of the figure.

FIG. 7 is the configuration showing a fifth example of basic unit which is a unit for linearly move the target molding 301 (hereinafter called the "E-type unit"). The E-type unit 330E consists of, as shown in FIG. 7 (A), a rod-less cylinder 331 which is fixed on the base and the connecting member of which reciprocates to linearly move the target molding 301 mounded on the connecting member 331a of the rod-less cylinder 331. When this basic unit is placed, for example, horizontally, and the target 300 is mounted on the connecting member 331a, it is possible to linearly move the target 300 in the horizontal direction as shown in FIG. 7 (B). In the example of mechanism of FIG. 7, the target may horizontally or vertically slide by the amount of stroke of the cylinder 331.

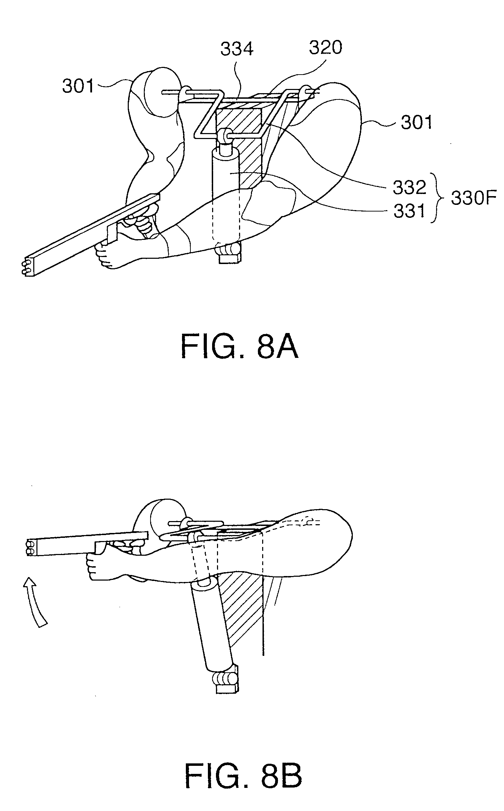

FIG. 8 is the configuration showing a sixth example of basic unit which is a unit for vertically moving the arms of the target 300 (hereinafter called the "F-type unit"). The F-type unit 330F consists of, as shown in FIG. 8 (A), a trunnion mounting cylinder 331 pivoted on the body 320 of the target 300, and a crank link 332 the crank pin of which is connected to the piston rod of the trunnion mounting cylinder 331 and the both crank shafts of which are pivoted on the target body 330 through a bearing member 334 to rock the target moldings 301 mounted on respective ends of both crank shafts. When this basic unit is used, for example, for moving the arms, and the shoulder of the arm is mounted on the end of the crank shaft at the arm end, the arms of the target moldings 301 can be moved in the direction of arrow as shown in FIG. 8 (B) so as to make appear that the gun held by the moldings aims.

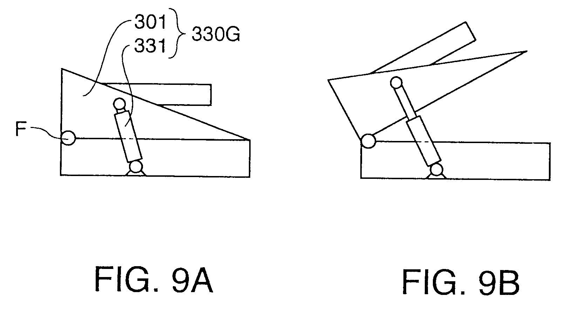

FIG. 9 is the configuration showing a seventh example of basic which is an example of basic unit applied to a target 300 with non-human shape (hereinafter called the "G-type unit"). The G-type unit 330G consists of, as shown in FIG. 9 (A), a non-human shaped target molding 301 a part of which is formed to be freely inclined though a rotating shaft, and a trunnion mounting cylinder 331 which is pivoted on a predetermined section of the target molding 310 and the piston rod of which is pivoted on a predetermined inclinable section of the target molding 301 to incline a part of the non-human shaped target molding 301. Then, when the target molding 301 is inclined around the rotating shaft F on the target molding 301 as a support point, it is possible to provide a reaction of destruction when it is shot as shown in FIG. 9 (B).

The above shows the examples of configuration of the basic unit Now, examples of configuration when the A through G type basic units are combined.

FIG. 10 is the configuration showing a first example of a combined unit combining A- and B-type basic units 330A and 330B. This combination enables the target 300 to suddenly appear from cover with the action of the B-type basic unit 330B when it attacks, and to take a reaction of destruction with the A-type basic unit 330A when it is shot. Similarly, a combination of A- and C-type basic units enables the target to peep its face through cover, and to take a reaction of destruction when it is shot. Thus, a combination of only two types of basic units such as A- and D-type basic units, or A- and E-type basic units can provide a target with various motions.

FIG. 11 is the configuration showing a second example of a combined unit in which E-type basic unit 330E is further combined to the combination of A- and B-type basic units 330A and 330B. This enables the target to laterally move while vertically moving and to take a reaction when it is shot. Similarly, a combination of A + B + D type basic units enables the target to repeatedly rock while vertically moving and to take a reaction when it is shot. Also similarly, a combination of three types of basic units such as A + C + D type basic units or A + C + E type basic units can provide a target with more complicated motions. Furthermore, a combination of a number of basic units such as a combination of F-type basic unit to the combination of three basic units can provide a motion very close to those of a living thing.

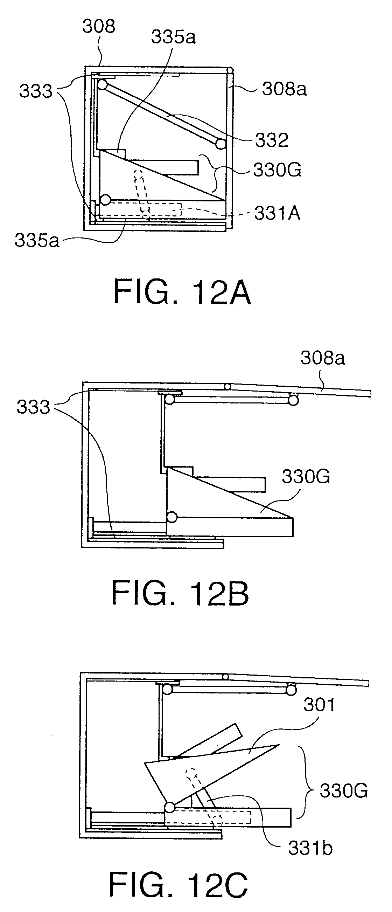

FIG. 12 is the configuration showing a third example of a combined unit combining the basic units in which G-type is combined with a gimmick for opening a door. As shown in FIG. 12 (A), slide rails 333 are provided on the base and the top plate of the target unit casing 308. A cylinder 331A is fixed on the side wall so that its piston head is guided by the slide rails 333. In addition, G-type basic unit 330G is fixed to the piston head of the cylinder 331A, and provided at a predetermined section of the basic unit 330G with a guide member 335a to be guided by the slide rail 333. Moreover, the guide member 335a on the top plate is pivoted on the openable cover 308a of the target unit casing 308 through a link 332.

Then, when, as shown in FIG 12 (B), the basic unit 330G is guided and moved by the slide rail 333 through driving of the cylinder 331A, the openable cover 308a is opened. In addition, as shown in FIG. 12 (C), a part of the target molding 301 is inclined by driving of the cylinder 331B in the basic unit 330G. With such arrangement, a non-human target can appear by opening the door, and take the reaction when it is shot.

As described, targets with various motions can be easily provided by selectively employing the basic units 330A - 330G for respective motion types. The basic units are not limited to those implementations described above. Even if the number of basic units is increased by only one, the number of combination can be further increased so that any conditions can be met by selectively employing basic units of various motion type for specific unit motion.

Next, an example of configuration for the operating mechanism according to a second implementation of the intelligent target of the present invention will be described in detail. In the second implementation, the operating mechanism for the target 300 consists of a cylinder driven under the drive control of a control system, and a link wherein it is arranged to reduce the number of cylinders as possible and to extensively utilize linkage so that complicated motions can be provided with easy control.

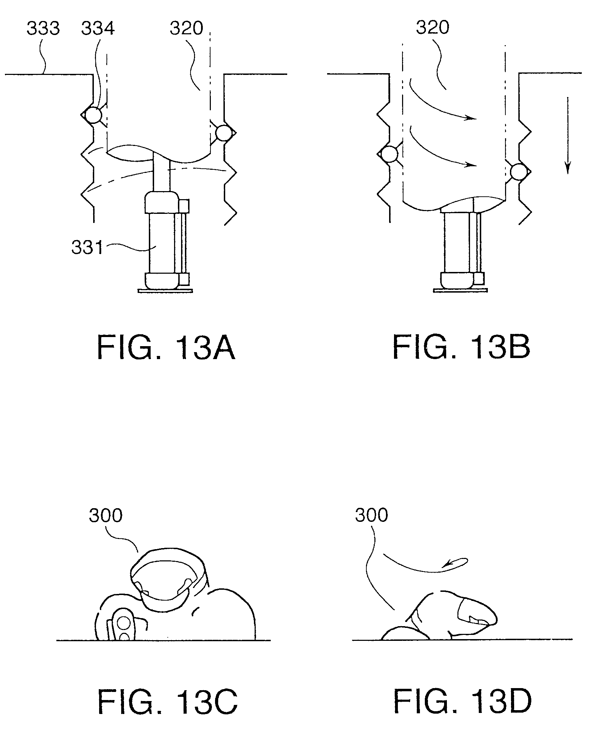

FIG. 13 is the configuration showing a first example of a second implementation of operating mechanism which is an example of target with an operating mechanism which vertically moves while rotating (hereinafter called the "first operating mechanism"). The first operating mechanism comprises, as shown in FIG. 13 (A), a target body mounting member 333 having a hole with a spiral groove, a target body 320 having casters 334 engaging said groove positioned on its peripheral wall, and provided at its lower section with a cylindrical fitting section fitting in said hole through the casters 334, and a cylinder 331 fixed on the bottom of the hole and having a piston rod fixed to the lower end of the fitting section of the target body 320.

When the cylinder 331 is driven in such construction, as shown in FIG. 13 (B), the target body 320 moves downward (or upward) while rotating along the groove. If this operating mechanism is used, for example, for the motion of the upper half of the body, it is possible, as shown in FIGS. 13 (C) and (D), to provide an action such that the target 300 runs away while shooting, or that the target 300 appears from or hides behind cover while turning its direction.

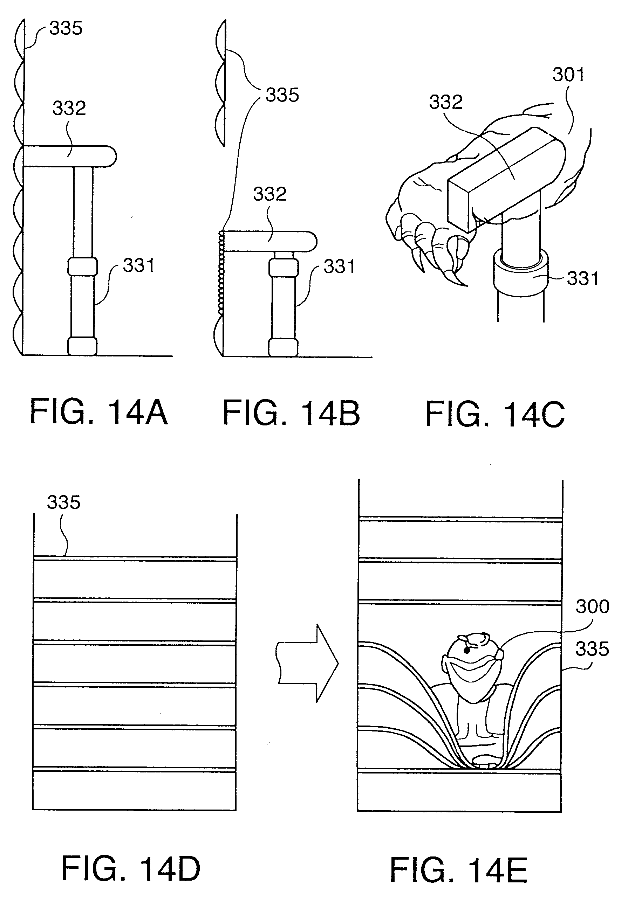

FIG. 14 is the configuration showing a second example of the second implementation of operating mechanism which is an example of target with an operating mechanism which opens or closes a blind (hereinafter called the "second operating mechanism"). The second operating mechanism comprises, as shown in FIG. 14 (A), a link 332 having its arm connected to a blind 335 and mounted with a target molding 301 for one of the aims of a target, and a cylinder 331 fixed on a base and having a piston rod fixed on a predetermined section of the link 332.

When the cylinder 331 is driven in such construction, as shown in FIG. 14 (B), the blind 335 is opened or closed for the vertical movement of the cylinder 331. When the operating mechanism is used for the vertical motion of the arm by mounting the target molding 301 for the arm on the link as shown in FIG. 14 (C), the blind 335 installed in front of the target 300 can be opened or closed by the hand of the target 300 so that it is possible to provide an action such that the target 300 appears by breaking the blind 335 or hides by closing the blind 335 as shown in FIGS. 14 (D) and (E).

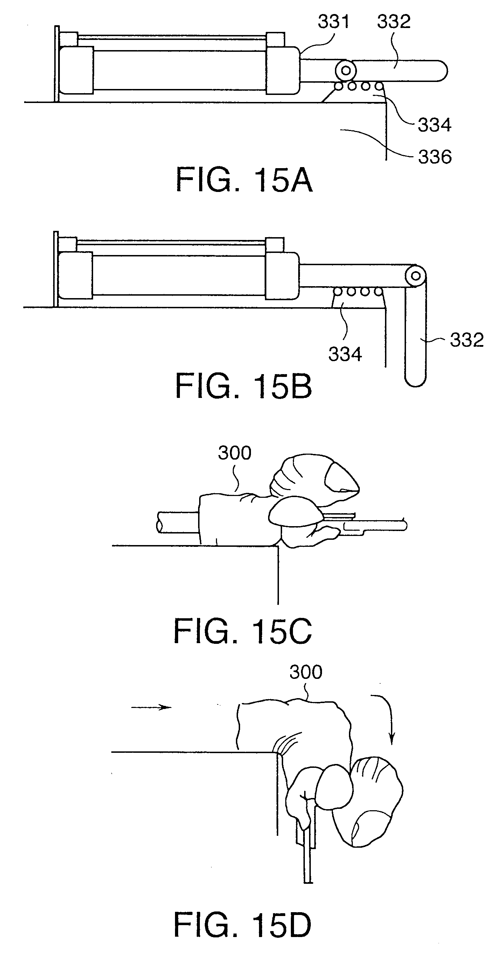

FIG. 15 is the configuration showing a third example of the second implementation of operating mechanism which is an example of target with an operating mechanism which linearly moves on the top plate of a target installing member 336 before inclines over its side plate (hereinafter called the "third operating mechanism"). The third operating mechanism comprises, as shown in FIG. 15 (A), a rod link 332, a cylinder 331 horizontally placed and fixed near the end of the top plate of the target installing member 336 and having a piston rod pivoted to the link 332, and a caster 334 installed near the end of the top plate for allowing sliding motion of the link 332 and the piston rod.

When the cylinder 331 is driven in such construction, as shown in FIG. 15 (B), the link 332 hangs down as the piston rod extends forward to the extent where the support for the link 332 by the caster 334 is lost. If this operating mechanism is used, for example, for the motion of the entire body, it is possible, as shown in FIG. 15 (C) and (D), to provide an action such that the target 300 goes sprawling and falls down forward when it is shot.

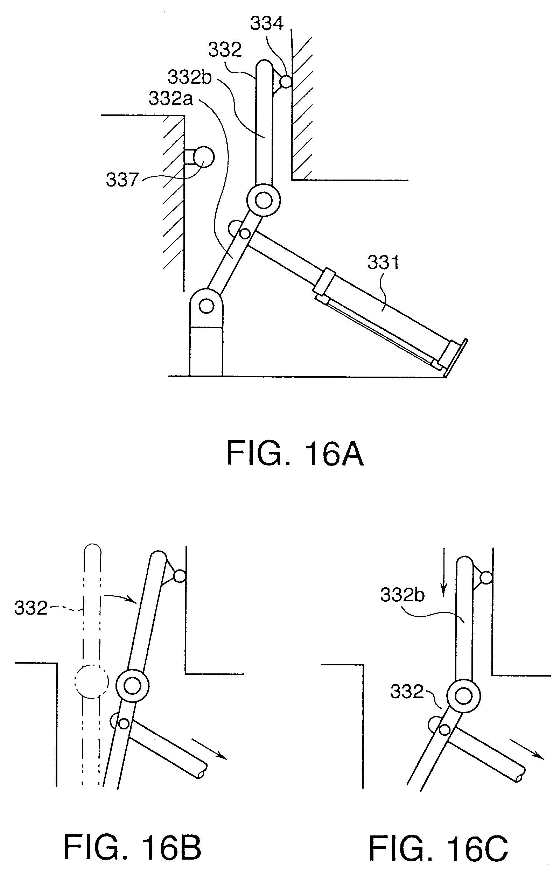

FIG. 16 is the configuration showing a fourth example of the second implementation of operating mechanism which is an example of target with an operating mechanism which inclines over the side wall before vertically moved downward on the side wall (hereinafter called the "fourth operating mechanism"). The fourth operating mechanism comprises, as shown in FIG. 16 (A), a link 332 provided upright and having a first link element 332a and a second link element 332b which are connected through a rotating shaft, one end of the first link element 332a being fixed on a base, a caster 334 mounted on one end of the second link element 332b sliding on the side wall, and a cylinder 331 fixed on a predetermined position and having a piston rod pivoted on a predetermined section of the first element 332a. A stopper is provided on the first link element 332a for allowing the first and second link elements 332a and 332b to incline over a predetermined angle around the rotating shaft. In addition, a receiving element 337 is provided for holding the second link element 332b to prevent the second link element 332b from inclining to a direction opposite to the side wall when the first link element 332a becomes vertical.

When the cylinder 331 is driven in such construction, as shown in FIG. 16 (B), the link 332 falls around the rotating shaft fixing the link on the base as the piston rod is retracted, and, as shown in FIG. 16 (C), is bent at its center so that the second link element 332b moves downward along the wall. If this operating mechanism is used, for example, for the motion of the entire body, it is possible to provide an action such that the target being shot leans against the wall behind, and the upper half of its body slides down on the wall.

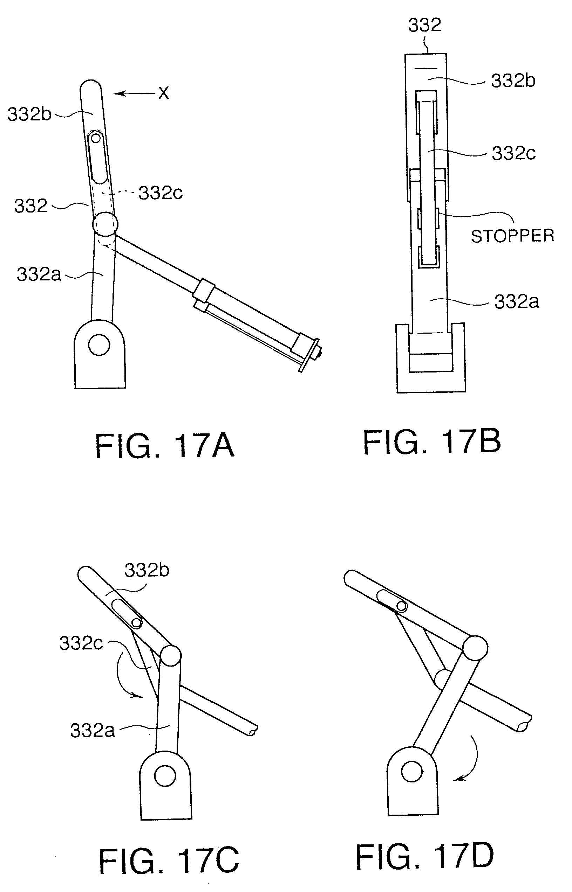

FIG. 17 is the configuration showing a fifth example of the second implementation of operating mechanism which is an example of target with an operating mechanism which is bent into an L-shape before inclining around a shaft on the base (hereinafter called the "fifth operating mechanism"). The fifth operating mechanism comprises, as shown in FIG. 17 (A) and a link arrangement viewing it from the arrow X (FIG. 17 (B)), a link 332 having a first link element 332a and a second link element 332b which are connected through a rotating shaft, one end of the first link element 332a being fixed on a base, a third link element 332c being connected through a slide hole provided at a predetermined section of the second link element 332b, and a cylinder 331 fixed on a predetermined position and having a piston rod pivoted on one end of the third element 332c. A stopper is provided on the first link element 332a for allowing the first and second link elements 332a and 332b to incline over a predetermined angle around the rotating shaft.

When the cylinder 331 is driven in such construction, as the piston rod is retracted in the state of FIG. 17 (A), the second link element 332b is pulled through the third link element 332c so that the first and second link elements 332a and 332b form an L-shape as shown in FIG 17 (C), and, as the piston rod is further retracted, and the second link element 332b is further pulled, the second link element 332b falls backward around the rotating fixing shaft on the base as shown in FIG. 17 (D). If this operating mechanism is used, for example, for the motion of the entire body, it is possible to provide an action such that, when the target is shot at its belly, it is blown backward or falls backward while holding its belly.

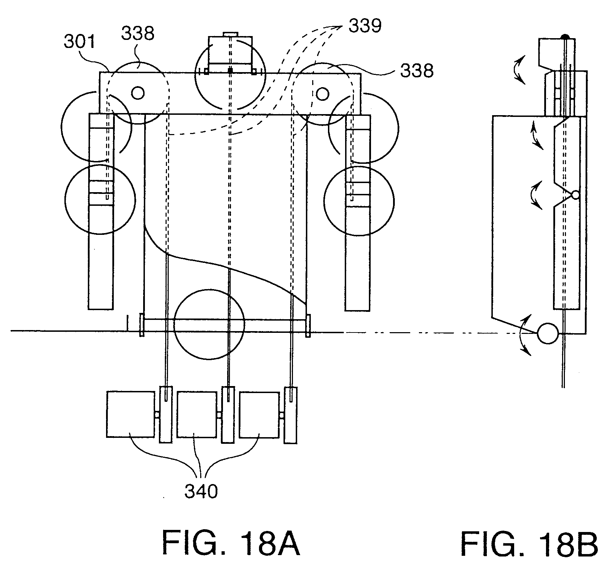

FIG. 18 is the configuration showing a sixth example of the second implementation of operating mechanism which is an example of target with an operating mechanism in which each part of the target moves stepwise (hereinafter called the "sixth operating mechanism"). The sixth operating mechanism comprises, as shown in FIG. 18 (A) and its side view (B), a target molding 301 in which each joint of the target is rotatably formed, pulleys 338 provided at specific joints of the target molding 301, wires 339 each guided by the respective pulleys 338 and each having one end fixed at a major position of the target molding 301, torque controlled drive units 340 driven by drive control of a control system and each having a drive connected to the wire 339. The torque controlled drive unit 340 may consist of a motor having an electromagnetic clutch and a brake. Circles in FIG. 18 (A) indicate movable sections at each of which the joint such as the neck, the shoulder, the elbow or the waist is rotatably formed.

With such construction, each part can be moved as in a marionette by driving the torque controlled drive unit 340 to wind or release the wires 339. If the operating mechanism is used, for example, for the motion of head or arm, it is possible to gradually makes each part of the target 300 "dangling" from the initially determined posture so that the motion when shot can be made more realistic.

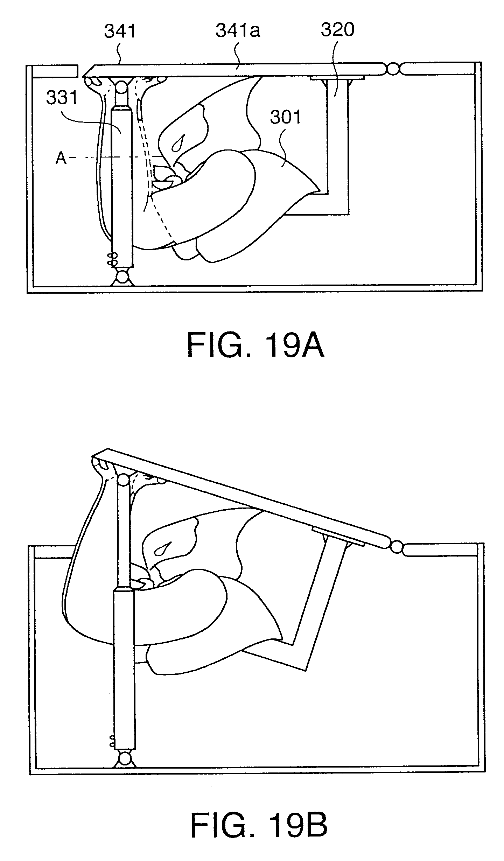

FIG. 19 is the configuration showing a seventh example of the second implementation of operating mechanism which is an example of target with an operating mechanism in which a target fixed on the inner wall of an upper lid of a target housing member appears from or retracts in the housing member (hereinafter called the "seventh operating mechanism"). The seventh operating mechanism comprises, as shown in FIG. 19 (A), a box-like target housing member 341 having a lid 341a provided on the top, the lid being opened or closed through a rotating shaft, and a cylinder 331 pivoted on the base plate of the target housing member 341 and having a piston rod pivoted on the inner wall of the lid 341a. A target molding 301 is mounted on the target body 320 fixed on the inner wall of the lid 341a.

When the cylinder 331 is driven in such construction, the lid 341a is opened or closed for the vertical movement of the cylinder 331. As shown in FIGS. 19 (A) and (B), if the target molding 301 for the upper half of the body is mounted on the target body 320, and the operating mechanism is used for the motion of the upper half of the body, it is possible to provide an action such that the target peeps through by opening the lid 341a. This target unit may be mounded on any place such as the ceiling, the floor, or the wall.

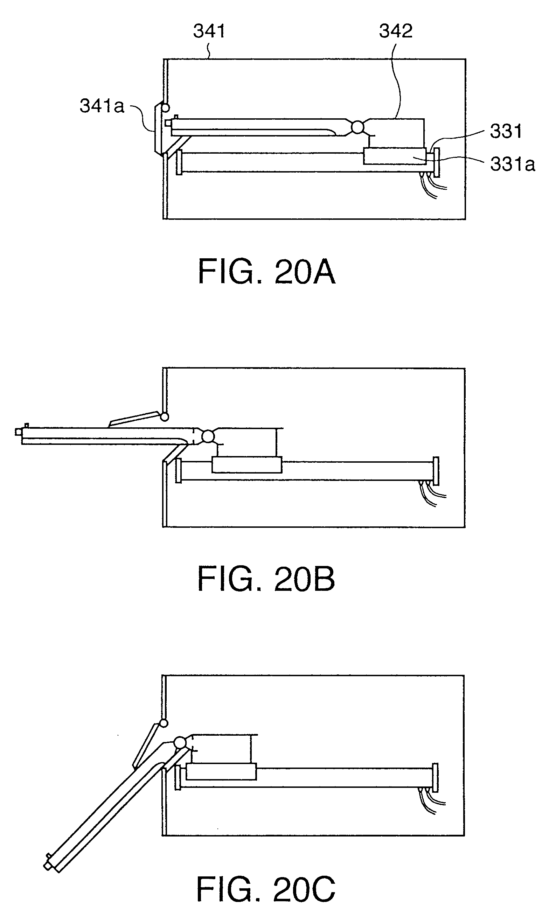

FIG. 20 is the configuration showing an eighth example of the second implementation of operating mechanism in which a non-human target, a gun emplacement unit, appears from the housing member by opening the lid, and a barrel inclines downward over the side wall in front of the outer wall of the housing member (hereinafter called the "eighth operating mechanism"). The eighth operating mechanism comprises, as shown in FIG. 20 (A), a box-like target housing member 341 having a lid 341a vertically mounded which is opened or closed through a rotating shaft, a rod-less cylinder 331 horizontally mounted in the target housing member 341 and on which a connecting member 331a reciprocates and can stop at an intermediate position, and a gun emplacement unit 342 mounted on the connecting member 331a of the rod-less cylinder 331, and on which a barrel 342a can rotate around a rotating shaft.

When the cylinder 331 is driven in such construction, and the connecting member 331a is moved to an intermediate position toward the lid 341a, as shown in FIG. 20 (B), the gun emplacement unit 342 appears from the target housing member 341 by opening the lid 341a, and, if it is further moved, the barrel 342a inclines downward over the side wall in front of the outer wall of the target housing member 341. If the operating mechanism is used for the motions for opening or closing of the lid, movement of the gun emplacement unit, and inclination of the barrel, it is possible to provide an action such as for appearance of the gun emplacement unit, or when the target is shot. Although there is shown an example where the gun emplacement unit 342 is mounted on the rod-less cylinder 331, it may be possible to mount a link rotatable around a rotating shaft on which link a target molding is mounted.

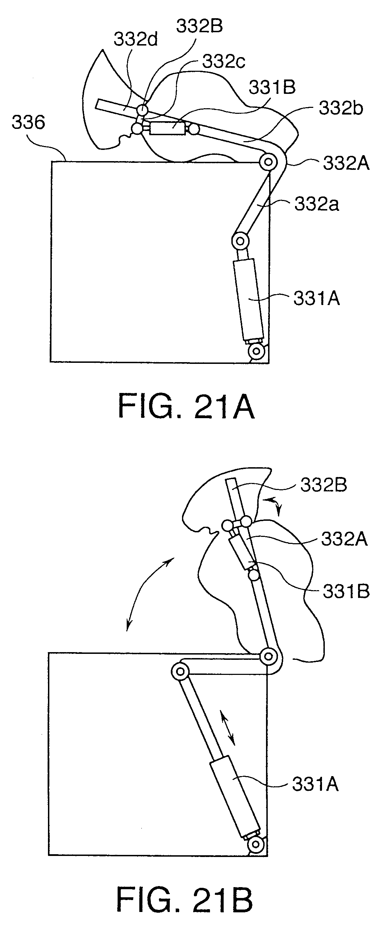

FIG. 21 is the configuration showing a ninth example of the second implementation of operating mechanism which is an example of target with an operating mechanism in which a part of a target molding is rocked from a horizontal position above the top outer wall of a target installing member to a vertical position, and another part of the target molding is further rotated (hereinafter called the "ninth operating mechanism"). The ninth operating mechanism comprises a box-like target installing member 336, a first trunnion mounting cylinder 331A, a first link 332A having a first arm 332a and a second arm 332b with a predetermined angle, their joint being pivoted on an end of the top inner wall of the target installing member 336, the first arm 332a being pivoted on the piston rod of the first trunnion mounting cylinder 331A, the second arm 332b being placed to rock from a horizontal position above the outer wall of the target installing member 336 to a vertical position, a second link 332B having a third arm 332c and a fourth arm 332d, their joint being pivoted on an end of the second arm 332b, and a second trunnion mounting cylinder 331B pivoted on a predetermined section or the second arm 332b and pivoted on an end of the third arm 332c.

When the first trunnion mounting cylinder 331A is driven in such construction, as shown in FIG. 21 (B), the first link 332A rocks from the horizontal position over the top outer wall of the target installing member 336 to the vertical position, and, then, when the second cylinder 331B is driven, the second link 332B rocks. As shown in FIGS. 21 (A) and (B), if the operating mechanism is used, for example, for the motion of the entire target by mounting the head of the target molding 310 on the fourth arm 332d, and the upper half of the target molding 301 on the second arm 332b, it is possible to provide an action that the target moves from the state of FIG. 21 (A) to that of FIG. 21 (B), that is, the target rises from a slouching posture. This has the target pretend to be dead, and then suddenly rise. In addition, it is possible to provide an action that the head of the target is blown off when it is shot.

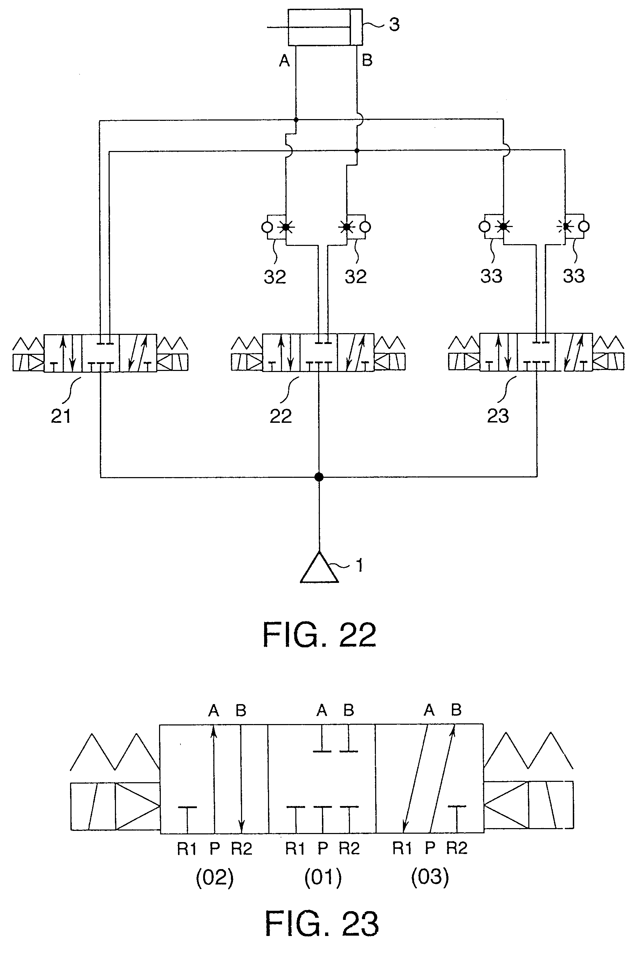

FIG. 22 is a pneumatic circuit for driving the cylinder 331 used in the operating mechanisms for the intelligent target of the present invention shown in FIGS. 3 - 21. In FIG. 22, pressurized air from a compressor 1 drives a cylinder 3 through circuits which are changed over by three three-position valves 21, 22, and 23 controlled by a mechanical controller 303. The configuration of the three-position valves 21 - 23 is shown in FIG. 23. The three-position valve is a valve having three valve positions, and can be changed over from a normal state (01) to state (02) or (03). The connection of circuits at each state is as follows:
State (01): Ports A and B communicating to sides A and B of the cylinder 3, respectively, air inlet port P from the compressor 1, and discharge ports R1 and R2 are all closed (that is, stop state).
State (02): Air from the compressor 1 enters into side A of the cylinder 3 through the port A, and is discharged from the side B of the cylinder 3 from the discharge port R2 through the port B.
State (03): Contrary to state (02), air enters in the side B of the cylinder 3 from the port B, and is discharged from the side A of the cylinder 3 from the discharge port R1 through the port A.

The relationship between the three valves 21, 22, and 23 is controlled in the following manner:
(1) While the valve 21 is being used, the valves 22 and 23 are stopped;
(2) While the valve 22 is being used, the valves 21 and 23 are stopped; and
(3) While the valve 23 is being used, the valves 21 and 22 are stopped.

Then, flow regulating valves 32 and 33 are mounted between the ports A and B of the valve 22 and the sides A and B of the cylinder 3, and between the port A and B of the valve 23 and the side A and B of the cylinder 3, respectively. Previous adjustment of the flow regulating valves 32 and 33 enables it to set the cylinder speed at three levels when each of the valves 21, 22, and 23 is used which is selectively used as the unit motion. Thus, the speed of unit motion can be controlled. Although three levels of cylinder speed are set in the above example, the number of levels may be set at any number. In addition, hydraulic pressure may be used as the drive source for the cylinder 3 in place of pneumatic pressure.

Although the above embodiment is described by exemplifying a target used in a shooting game, the intelligent target of the present invention may apply to a robot for an event.

As described, the intelligent target tor shooting game of the present invention can provide the target with intelligent functions for motion. In addition, targets with various motions can be easily provided by selectively employing the basic units of respective motion types described for the first implementation. Targets of underlings, middle classes and big bosses for which different motions are desired to be provided can be easily produced by combining the basic units. Furthermore, because the operating mechanisms capable of complicated motions described for the second implementation are configured to provide complicated actions by reducing the number of cylinders as possible and extensively utilizing linkages, it is possible to provide complicated motions with easy control, and to provide an intelligent target having an inexpensive operating mechanism with small size and light weight. Furthermore, more realistic various actions can be attained by varying speed with a cylinder which can be driven and controlled for different speed by a control system.

Furthermore, the following advantages can be attained by using the intelligent target of the present invention:
(1) Pressure can be obtained that it is not known where a target hide in the amusement facility, and from where it shoots;
(2) When a target appears, both target and player are ready for shoot so that the game can be made more realistic;
(3) When only how the target appears is considered, more intelligent motions can be attained by having the target be appearing but quickly hide again, or by adjusting timing for aiming with a gun and shooting after appearance;
(4) There are infinite possibilities as a game because effects such as team work of targets, attack in formation or covering fire can be provided by concentrically controlling these targets; and
(5) The target can be used as a standalone target by changing its mode so that it can also used for an event.

## Claims

1. In an intelligent target for shooting game used for a shooting game which is installed in an amusement facility, and in which a player plays a shooting battle with a robot-type target, said target comprising an operating mechanism, wherein said operating mechanism comprises a combination of one or more basic units, said basic unit consisting of a drive mechanism driven under drive control of a control system, and a link, said basic unit causing a part or all of molding of the target to take predetermined unit motions.

2. The intelligent target tor shooting game according to Claim 1, wherein said basic unit consists of a trunnion mounting cylinder pivoted on the body of said target, and a link having a first arm and a second arm with a predetermined angle the joint of which is pivoted to said target body, said first arm being pivoted on the piston rod of said trunnion mounting cylinder, said target molding mounted on the second arm of said link being inclined around the joint as a support point.

3. The intelligent target for shooting game according to Claim 1, wherein said basic unit consists of a cylinder fixed on a base, and a cylindrical link fixed on the piston rod of said cylinder and surrounding said cylinder for guiding the vertical movement of said cylinder so as to vertically move said molding mounted on said link.

4. The intelligent target for shooting game according to Claim 1, wherein said basic unit consists of a trunnion mounting cylinder pivoted on the side wall of a cylinder mounting member mounted upright on the base, and a rod link a predetermined section of which is pivoted on the piston rod of said trunnion mounting cylinder and an end of which is pivoted on the base so as to incline said molding mounted on the other end of the arm around said one end of the arm as a support point.

5. The intelligent target for shooting game according to Claim 1, wherein said basic unit consists of a cylinder fixed on the base so that its piston rod is guided by a slide rail provided on a base, and a link to which a connecting rod of said piston head is connected through a slide hole provided near one end of the arm, and a predetermined section of said arm of which is pivoted on said base so as to rock said molding mounted on the other end of the arm of said link.

6. The intelligent target for shooting game according to Claim 1, wherein said basic unit consists of a rod-less cylinder which is fixed on a base and the connecting member of which reciprocates to linearly move said molding mounded on the connecting member of said rod-less cylinder.

7. The intelligent target for shooting game according to Claim 1, wherein said basic unit consists of a trunnion mounting cylinder pivoted on the body of said target, and a crank link the crank pin of which is connected to the piston rod of said trunnion mounting cylinder and the both crank shafts of which are pivoted on said target body through a bearing member to rock said moldings mounted on respective ends of both crank shafts.

8. The intelligent target for shooting game according to Claim 1, wherein said basic unit consists of a non-human shaped target molding a part of which is formed to be freely inclined through a rotating shaft, and a trunnion mounting cylinder which is pivoted on a predetermined section of said molding and the piston rod of which is pivoted on a predetermined inclinable section of said molding to incline a part of said non-human shaped target molding.

9. In an intelligent target for shooting game used for a shooting game which is installed in an amusement facility, and in which a player plays a shooting battle with a robot-type target, said target having an operating mechanism, said operating mechanism comprising a target body mounting member having a hole with a spiral groove, a target body having casters engaging said groove positioned on its peripheral wall, and provided at its lower section with a cylindrical fitting section fitting in said hole through the casters, and a cylinder fixed on the bottom of said hole and having a piston rod fixed to the lower end of the fitting section of said target body, whereby the molding of said target can be vertically moved while rotating under drive control of a control system.

10. In an intelligent target for shooting game used for a shooting game which is installed in an amusement facility, and in which a player plays a shooting battle with a robot-type target, said target having an operating mechanism, said operating mechanism comprising a link having its arm connected to a blind and mounted with a target molding for one of the arms of said target, and a cylinder fixed on a base and having a piston rod fixed on a predetermined section of said link, whereby said molding is vertically moved under drive control of a control system, and said blind installed in front of said target can be opened or closed by the band of said molding.

11. In an intelligent target for shooting game used for a shooting game which is installed in an amusement facility, and in which a player plays a shooting battle with a robot-type target, said target having an operating mechanism, said operating mechanism comprising a rod link, a cylinder horizontally placed and fixed near the end of the top plate of a target installing member and having a piston rod pivoted to said link, and a caster installed near the end of said top plate for allowing sliding motion of said link and said piston rod, whereby a molding of said target mounted on said link and said piston rod linearly moves over the top plate of said target installing member under drive control of a control system before it inclines over its side plate.

12. In an intelligent target for shooting game used for a shooting game which is installed in an amusement facility, and in which a player plays a shooting battle with a robot-type target, said target having an operating mechanism, said operating mechanism comprising a link provided upright and having a first link element and a second link element which are connected through a rotating shaft, one end of said first link element being fixed on a base, a caster mounted on one end of said second link element sliding on the side wall, and a cylinder fixed on a predetermined position and having a piston rod pivoted on a predetermined section of said first element, whereby a molding of said target mounted on said second link element inclines toward said side wall under drive control of a control system before it vertically moves downward on said side wall.

13. In an intelligent target for shooting game used for a shooting game which is installed in an amusement facility, and in which a player plays a shooting battle with a robot-type target, said target having an operating mechanism, said operating mechanism comprising a link having a first link element and a second link element which are connected through a rotating shaft, one end of said first link element being fixed on a base, a third link element being connected through a slide hole provided at a predetermined section of said second link element, and a cylinder fixed on a predetermined position and having a piston rod pivoted on one end of said third element, whereby a molding of said target mounted on said first and second link elements is bent into an L-shape before it rocks around a shaft on said base.

14. In an intelligent target for shooting game used for a shooting game which is installed in an amusement facility, and in which a player plays a shooting battle with a robot-type target, said target having an operating mechanism, said operating mechanism comprising a target molding in which each joint of the target is rotatably formed, pulleys provided at specific joints of said molding, wires each guided by the respective pulleys and each having one end fixed at a major position of said molding, torque controlled drive units driven by drive control of a control system and each having a drive connected to said wire, whereby each part of said target molding is moves stepwise.

15. In an intelligent target for shooting game used for a shooting game which is installed in an amusement facility, and in which a player plays a shooting battle with a robot-type target, said target having an operating mechanism, said operating mechanism comprising a box-like target housing member having a lid provided on the top, said lid being opened or closed through a rotating shaft, and a cylinder pivoted on the base plate of said target housing member and having a piston rod pivoted on the inner wall of said lid, whereby a molding mounted on the body of said target fixed on the inner wall of said lid appears from or retract in said target housing member under drive control of a control system.

16. In an intelligent target for shooting game used for a shooting game which is installed in an amusement facility, and in which a player plays a shooting battle with a robot-type target, said target having an operating mechanism, said operating mechanism comprising a box-like target housing member having a lid vertically mounded which is opened or closed through a rotating shaft, a rod-less cylinder horizontally mounted in said target housing member and on which a connecting member reciprocates and can stop at an intermediate position, and a gun emplacement unit mounted on said connecting member of said rod-less cylinder, and on which a barrel can rotate around a rotating shaft, whereby said gun emplacement unit appears from said target housing member by opening said lid under drive control of a control system, and said barrel inclines downward over the side wall in front of the outer wall of said target housing member.

17. In an intelligent target for shooting game used for a shooting game which is installed in an amusement facility, and in which a player plays a shooting battle with a robot-type target, said target having an operating mechanism, said operating mechanism comprising a box-like target installing member, a first trunnion mounting cylinder, a first link having a first arm and a second arm with a predetermined angle, their joint being pivoted on an end of the top inner wall of said target installing member, said first arm being pivoted on the piston rod of said first trunnion mounting cylinder, said second arm being placed to rock from a horizontal position above the outer wall of said target installing member to a vertical position, a second link having a third arm and a fourth arm, their joint being pivoted on an end of said the second arm, and a second trunnion mounting cylinder pivoted on a predetermined section of said second arm and pivoted on an end of said third arm, whereby a first molding of said target mounted on said second arm can rock from a horizontal position above the outer wall of said target installing member to a vertical position, and a second molding of said target mounted on said fourth arm can rock around said joint as a support point.

18. In an intelligent target for shooting game used for a shooting game which is installed in an amusement facility, and in which a player plays a shooting battle with a robot-type target, said target comprising an operating mechanism, wherein said operating mechanism comprises a combination of one or more basic units, said basic unit consisting of a pneumatic cylinder driven at different speed selected by drive control of a control system, and a link, said basic unit causing a part or all of molding of the target to take predetermined unit motions.

19. The intelligent target for shooting game according to Claim 18, wherein said pneumatic cylinder is replaced with a hydraulic cylinder.
